# EUROPEAN PATENT SPECIFICATION

(11) **EP 0 910 105 B1**
(45) Date of publication and mention of the grant of the patent: **04.10.2006**
(21) Application number: 98203368.0
(22) Date of filing: 06.10.1998
(51) Int. Cl.: H01H 47/00

(54) **Electrical switching system**
Elektrisches Schaltersystem
Système de commutation électrique

(30) Priority: 14.10.1997 IT TO970902
(43) Date of publication of application: 21.04.1999
(73) Proprietor: CNH Italia S.p.A., 41100 Modena (IT)
(72) Inventor: Mongiardo, Marcello, 41100 Modena (IT)
(74) Representative: Vandenbroucke, Alberic

(56) References cited:
- US-A- 4 716 518
- US-A- 4 922 177
- US-A- 5 150 095

## Description

The present invention relates to an electrical switching system, particularly, although not exclusively, for use on agricultural vehicles, such as tractors.

Multi-position switches are used in automotive applications to switch on and off several electrical loads. For example, a switch used to control the vehicle lights may have three positions corresponding to ON, sidelights ON, and headlights ON. The switch has internal contacts that connect a live wire to one or more of the electrical loads, depending on the switch position.

A disadvantage of such a switch, especially in automotive applications, is the number of wires that need to be connected to the switch. In particular, it is necessary to have a live wire and a further wire for each controlled load.

In US-A-5.150.095, a complicated switch is proposed, however requiring only two wires to control different functions. A central track of the switch is connected to a live wire whereas an outer track with separate conductive pads is connected to a microcomputer. To allow a current to flow from the central track to the microcomputer, a wiper is operable to form a conductive bridge between the central and outer tracks. This means that, during turning of the switch to different positions, full current of the live wire is passed on to the outer track while passing over a conductive pad, but is interrupted again in the free space between two adjacent conductive pads. Obviously, switching the full current on and off in such a manner may cause the creation of sparks which could lead to corrosion of the conductive pads.

US-A-4.922.177 proposes to use an arcuate track of which one end is connected to a live wire, whereas the other end is connected to earth. A wiper, rotatable around the center of the arcuate track, sweeps over the arcuate track and transmits a current to a control unit in dependence on its position along the track, thereby indicating the position of a gas pedal. No other functions are controlled and the system does not comprise any means to determine whether a short circuit to live or an open circuit is created.

With a view to mitigating the above disadvantages, it is an object of the present invention to provide a switch operable to control a number of loads in a more secure manner.

According to the present invention, an electrical switching system is provided comprising a switch; the switch having a wiper arm movable between discrete contact points on a resistive track and the resistive track having extreme ends respectively connected to live and earth; a control unit being connected to the wiper arm of the switch to receive a signal indicative of the position of the wiper arm along the resistive track.

The system is characterized in that :
- the wiper arm is operable to switch a plurality of electrical loads on and off in dependence upon the received signal; and
- the end positions on the resistive track at which the voltages are equal to the full supply voltage and zero, respectively, do not correspond to the switching on of any of the electrical loads, to avoid inadvertent switching on of a load should a short circuit to live or an open circuit occur.

The switch in the present invention is not used directly to make and interrupt the supply of power to each load but only to supply a signal to the control unit to indicate the loads that should be powered ON. The switch itself only acts as a potentiometer with a resistive track made up of one continuous resistor or a chain of discrete resistors. If the ends of the resistive track are connected to live and earth, respectively, then it will act as a potential divider and the voltage at the movable wiper arm will depend on its position along the resistive track. The control unit then acts to switch on the appropriate load depending on the voltage received from the switch.

The invention therefore requires only three wires to lead to the switch, regardless of the number of loads operated by the switch, and this considerably simplifies the vehicle wiring.

It is also preferred that the end positions on the potentiometer, i.e. the positions at which the wiper arm is at the full supply voltage or zero volts, should not correspond to the switching on of any of the electrical loads. In this way, the control unit will be able to discriminate between a voltage generated by the switch and a voltage resulting from an open or short circuit in the wire leading from the switch to the control unit.

The switch may be a rotary switch in which the wiper arm rotates about a central position and makes contact with an arcuate track. Alternatively, the switch may be a toggle switch in which the wiper arm moves along a linear track in dependence on the position of an operating toggle of the switch. In the latter case, instead of being directly connected to the operating toggle, so that each wiper position corresponds to a unique position of the toggle, the wiper arm may be moved incrementally, for example by a ratchet mechanism, along the resistive track with each actuation of the toggle. It will be appreciated however that the mechanism used to position the wiper arm along the resistive track is not critical to the present invention.

The control unit may conveniently be constructed as an analogue to digital (A/D) converter connected to electrical relays that operate the individual loads depending on the digital output of the A/D converter.

If desired, the individual relays may each be mounted adjacent the load that they control and they may each be fitted with a communications processor to receive instruction from the control unit over a common data bus.

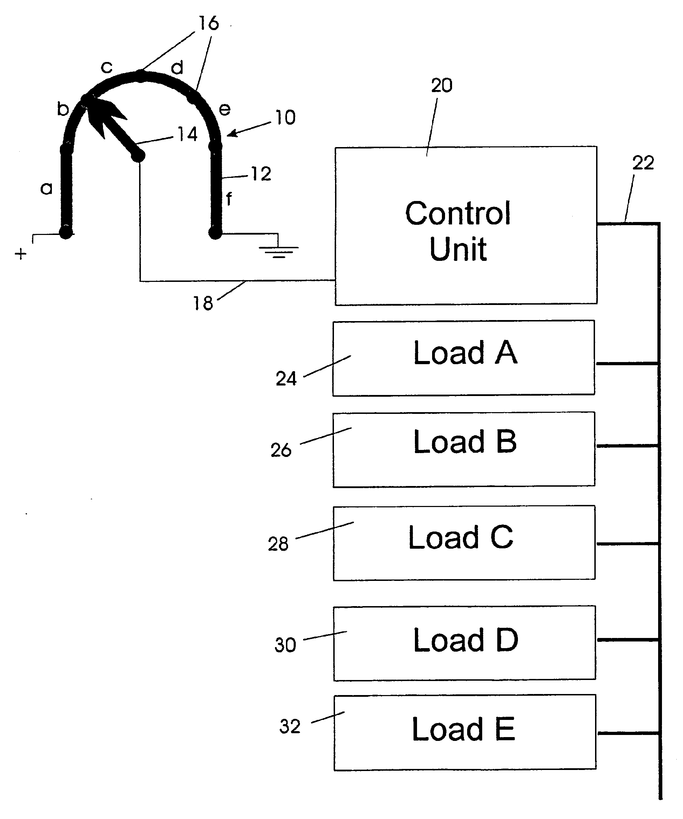

The invention will now be described further, by way of example, with reference to the accompanying drawing, in which the single figure shows a switching system of the invention.

The drawing shows a switch 10 that comprises a resistive track 12 made up of six sections designated *a* to *f*, respectively. A wiper arm 14 moves in an arcuate path and can be stopped in any of five positions defined by fixed contacts 16 arranged along the resistive track 12. The resistive track 12 ends at two connection terminals that cannot be contacted by the wiper arm 14 and are in use respectively connected to live and earth. The switching system illustrated is intended for an agricultural vehicle in which case the earth terminal is connected to the vehicle chassis and the live terminal is connected to the positive side (e.g. 12 V) of the vehicle battery.

The resistive track acts as a potential divider and the voltage tapped by the wiper arm 14 will depend on the position of the wiper arm. Because the wiper arm 14 cannot reach the live and earth terminals, the voltage on the wiper arm will never be equal to zero or the full battery voltage under normal circumstances and the voltage will be uniquely indicative of the contact 16 on which the wiper arm 14 rests.

It should be mentioned at this juncture that the design of the switch 10 is not fundamental to the invention. The illustrated rotary switch could be replaced by a linear switch or a multi-position toggle switch for as long as the switch generates a signal on a single line indicative of its position.

The voltage tapped by the wiper arm 14 from the voltage divider constituted by the resistive track 12 is applied by way of a line 18 to a control unit 20. The control unit 20 comprises an analogue to digital (A/D) converter, a logic circuit that generates the unique address of one of five loads 24, 26, 28, 30 and 32 depending on the magnitude of the voltage on the line 18 and a communications circuit that places the generated address on a serial data bus 22. Each of the load circuits 24 to 32 is connected to the data bus 22 and has a communications circuit that decodes the serial data on the data bus. A logic circuit associated with each load recognises when its own address is on the data bus 22 and activates a relay that switches the associated load on or off.

In this way, apart from the supply and earth connections to the switch 10, only a single line is required to allow the switch to control any number of loads. Furthermore the risk of any load being operated inadvertently can be avoided in that if the line 18 should develop a short circuit to live or an open circuit then the voltage on the line 18 will be equal to the full supply voltage or zero, neither of which values will correspond to one of the controlled loads.

It is not essential for the control unit 20 to communicate with the individual loads via a serial data bus and it would be alternatively possible for the control unit to include individual relays that are switched on and off in dependence on the voltage on the line 18, the switching contacts of the relays being directly connected to the controlled loads.

## Claims

1. An electrical switching system comprising a switch (10); the switch having a wiper arm (14) movable between discrete contact points (16) on a resistive track (12) and the resistive track (12) having extreme ends respectively connected to live and earth; a control unit (20) being connected to the wiper arm (14) of the switch (10) to receive a signal indicative of the position of the wiper arm (14) along the resistive track (12); and
**characterized in that** :
- the wiper arm (14) is operable to switch a plurality of electrical loads (24, 26, 28, 30, 32) on and off in dependence upon the received signal; and
- the end positions on the resistive track (12) at which the voltages are equal to the full supply voltage and zero, respectively, do not correspond to the switching on of any of the electrical loads (24, 26, 28, 30, 32), to avoid inadvertent switching on of a load should a short circuit to live or an open circuit occur.

2. A switching system according to claim 1, **characterized in that** the switch (10) is a rotary switch in which the wiper arm (14) rotates about a central position and makes contact with an arcuate track (12).

3. A switching system according to claim 1, **characterized in that** the switch (10) is a toggle switch in which the wiper arm (14) moves along a linear track in dependence on the position of an operating toggle.

4. A switching system according to any of the preceding claims **characterized in that** the control unit (20) comprises an analogue to digital (A/D) converter connected to electrical relays that operate the individual electrical loads (24, 26, 28, 30, 32) depending on the digital output of the A/D converter.

5. A switching system according to claim 4 **characterized in that** the individual relays are each fitted with a communications processor to receive instructions from the control unit (20) over a common data bus (22).

6. A switching system according to any of the preceding claims **characterized in that** the resistive track (12) comprises a chain of discrete resistors (a-f).

7. A switching system according to any of the claims 1 to 5 **characterized in that** the resistive track (12) is made up of one continuous resistor.

8. A switching system according to any of the preceding claims **characterized in that**, apart from the supply and earth connections to the switch (10), the switch (10) comprises only a single line (18) leading to the control unit (20) to allow the switch (10) to control any number of loads (24, 26, 28, 30, 32).

## Patentansprüche

1. Elektrisches Schaltersystem mit einem Schalter (10); wobei der Schalter einen Schleifarm (14) aufweist, der zwischen diskreten Kontaktpunkten (16) auf einer Widerstandsbahn (12) beweglich ist, und wobei die Widerstandsbahn (12) äußere Enden aufweist, die jeweils mit der Betriebsspannung bzw. Erde verbunden sind; wobei eine Steuereinheit (20) mit dem Schleifarm (14) des Schalters (10) verbunden ist, um ein die Position des Schleifarms (14) entlang der Widerstandsbahn (12) anzeigendes Signal zu empfangen; und
**dadurch gekennzeichnet, dass**:
- der Schleifarm (14) zum Ein- und Ausschalten einer Vielzahl von elektrischen Lasten (24, 26, 28, 30, 32) in Abhängigkeit von dem empfangenen Signal betreibbar ist; und
- die Endpositionen der Widerstandsbahn (12), an denen die Spannungen gleich der vollen Betriebsspannung bzw. Null sind, nicht dem Einschalten irgendeiner der elektrischen Lasten (24, 26, 28, 30, 32) entsprechen, um ein versehentliches Einschalten einer Last zu vermeiden, wenn ein Kurzschluss zu Betriebsspannung oder eine Unterbrechung auftritt.

2. Schaltersystem nach Anspruch 1, **dadurch gekennzeichnet, dass** der Schalter (10) ein Drehschalter ist, bei dem sich der Schleifarm (14) um eine in der Mitte liegende Position dreht und einen Kontakt mit einer bogenförmigen Bahn (12) herstellt.

3. Schaltersystem nach Anspruch 1, **dadurch gekennzeichnet, dass** der Schalter (10) ein Kipphebelschalter ist, bei dem der Schleifarm (14) sich entlang einer linearen Bahn in Abhängigkeit von der Position eines Betätigungshebels bewegt.

4. Schaltersystem nach einem der vorhergehenden Ansprüche, **dadurch gekennzeichnet, dass** die Steuereinheit (20) einen Analog-/Digital- (A/D-) Wandler umfasst, der mit elektrischen Relais verbunden ist, die die einzelnen elektrischen Lasten (24, 26, 28, 30, 32) in Abhängigkeit von dem digitalen Ausgangssignal des A/D-Wandlers betätigen.

5. Schaltersystem nach Anspruch 4, **dadurch gekennzeichnet, dass** die einzelnen Relais jeweils mit einem Kommunikationsprozessor versehen sind, um Befehle von der Steuereinheit (20) über einen gemeinsamen Datenbus (22) zu empfangen.

6. Schaltersystem nach einem der vorhergehenden Ansprüche, **dadurch gekennzeichnet, dass** die Widerstandsbahn (12) eine Kette von diskreten Widerständen (a-f) umfasst.

7. Schaltersystem nach einem der Ansprüche 1-5, **dadurch gekennzeichnet, dass** die Widerstandsbahn (12) aus einem durchgehenden Widerstand gebildet ist.

8. Schaltersystem nach einem der vorhergehenden Ansprüche, **dadurch gekennzeichnet, dass** abgesehen von dem Betriebsspannungs- und Erdverbindungen des Schalters (10) der Schalter (10) lediglich eine einzige Leitung (18) umfasst, die zu der Steuereinheit (20) führt, um es dem Schalter zu ermöglichen, irgendeine Anzahl von Lasten (24, 26, 28, 30, 32) zu steuern.

## Revendications

1. Système de commutation électrique est prévu qui comprend un commutateur (10); le commutateur possédant un bras de frotteur (14) déplaçable entre des points de contact (16) discrets sur une piste résistive (12), la piste résistive (12) possédant des extrémités extrêmes reliées respectivement au conducteur sous tension et à la terre ; une unité de commande (20) étant reliée au bras du frotteur (14) du commutateur (10) afin de recevoir un signal indiquant la position du bras de frotteur (14) sur la piste résistive (12); et
**caractérisé en ce que** :
- le bras de frotteur (14) peut être utilisé pour mettre sous tension et hors tension une pluralité de charges électriques (24, 26, 28, 30, 32) en fonction du signal reçu, et
- les positions finales sur la piste résistive (12) pour laquelle les tensions sont égales à la tension d'alimentation totale et à zéro, respectivement, ne correspond pas à la mise sous tension de l'une des charges électriques (24, 26, 28, 30, 32), de manière à éviter une mise sous tension intempestive d'une charge dans l'hypothèse ou un court-circuit sous-tension ou un circuit ouvert se produirait.

2. Système de commutation selon la revendication 1, **caractérisé en ce que** le commutateur (10) est un commutateur rotatif dans lequel le bras de frotteur (14) tourne autour d'une position centrale et fait contact avec une piste en forme d'arc (12).

3. Système de commutation selon la revendication 1, **caractérisé en ce que** le commutateur (10) est un commutateur à bascule dans lequel le bras de frotteur (14) se déplace sur une piste linéaire en fonction de la position d'une bascule de commande.

4. Système de commutation selon l'une quelconque des revendications précédentes, **caractérisé en ce que** l'unité de commande (20) comprend un convertisseur analogique-numérique (A/N) relié à des relais électriques pour commander les charges électriques individuelles (24, 26, 28, 30, 32) en fonction de la sortie numérique du convertisseur A/N.

5. Système de commutation selon la revendication 4, **caractérisé en ce que** les relais individuels sont équipés chacun d'un processeur de communication pour recevoir des instructions de l'unité de commande (20) via un bus de données commun (22).

6. Système de commutation selon l'une quelconque des revendications précédentes, **caractérisé en ce que** la piste résistive (12) comprend une chaîne de résistances discrètes (a-f).

7. Système de commutation selon l'une quelconque des revendications 1 à 5, **caractérisé en ce que** la chaîne résistive (12) est constituée d'une résistance continue.

8. Système de commutation selon l'une quelconque des revendications précédentes **caractérisé en ce que**, outre les connexions d'alimentation et de terre au commutateur (10), le commutateur (10) comprend seulement une ligne unique (18) menant à l'unité de commande (20) de manière à permettre au commutateur (10) de commander tout nombre de charges (24, 26, 28, 30, 32).
